Europäisches Patentamt

European Patent Office

Office européen des brevets

(11) Publication number: **0 246 036**

A1

# EUROPEAN PATENT APPLICATION

(21) Application number: 87304101.6

(22) Date of filing: 08.05.87

(51) Int. Cl.³: **B 01 D 35/02**
B 01 D 13/00, B 01 D 13/01

(30) Priority: 12.05.86 JP 106590/86

(43) Date of publication of application:
19.11.87 Bulletin 87/47

(84) Designated Contracting States:
AT BE CH DE ES FR GB GR IT LI LU NL SE

(71) Applicant: JAPAN GORE-TEX, INC.
42-5, 1-chome Akazutsumi
Setagaya-ku Tokyo 156(JP)

(72) Inventor: Ichiyasu, Satoshi
14-34, 1-chome Saihigoshi-machi
Okayama-shi 703(JP)

(72) Inventor: Shibata, Yoshihiko
83-11 Matsushin-cho
Okayama-shi 704(JP)

(74) Representative: Taylor, Derek George et al,
Mathisen, Macara & Co. The Coach House 6-8 Swakeleys
Road
Ickenham Uxbridge UB10 8BZ(GB)

(54) Filtration system.

(57) A filter system is provided having a filter (10) of porous, expanded polytetrafluoroethylene, means (31) for flowing an impure liquid (30) to be filtered through the filter (10), the filter system being entirely immersed in the impure liquid (30) to be filtered. The filter (10) is preferably in the form of a plurality of hollow fibers, a plurality of tubes or a supported film.

Fig. 3.

EP 0 246 036 A1

## FILTRATION SYSTEM

The present invention concerns a filter system. A relatively low-cost filter system is provided which is easy to handle and control and which performs a reliable and precise filtering action.

The present invention is particularly useful in filtering chemicals used in the field of semiconductor manufacture, in the food industry and in other fields.

In recent years there has been a demand for the high purification of air, gases, water and chemicals used in industries such as the food industry and the semiconductor industry. Particularly in the semiconductor field, the purification of treatment solutions used in manufacturing processes has received special attention. In this field, the purification of liquids such as chemical solutions and pure water to a high purity is indispensable for improving product yields and achieving high quality. Furthermore, in such fields, chemicals which are harmful to the human body (e.g. strong acids such as nitric acid, sulfuric acid and hydrochloric acid and organic chemicals such as trichloroethylene, acetone and IPA) are commonly used. In the case of such chemicals, there is a need for a filter system which makes it possible to use the chemicals safely without danger of leakage.

Conventionally, purification in chemical solution tanks used in washing processes and etching processes in the aforementioned manufacture of semiconductors has generally been performed as shown in Figure 4, which is a schematic partial sectional view of a filter system. The liquid 40 (chemical solution or water) that is to be purified is temporarily conducted out of the tank 43, purified by means of a pump 41 and filter 42, and then recirculated back into the tank 43. Various proposals have been made regarding the piping and connections involved, pumps and filters having good sealing properties, and methods for sealing internal cartridges in such filters.

In the case of such conventional filter systems, there is an unavoidable danger of (a) leakage of the liquid (chemical solution or water) from the piping, filter parts and pump parts, (b) damage due to the high pressure of the pressure-feeding of the liquid inside the piping, and (c) generation of impurities from the piping. This danger is conspicuously increased in cases where the liquid involved chemical solution or water) is at a high temperature.

In such cases, furthermore, the number of parts required (i.e., special piping, joints, protective outer tubes, caps, etc) is large. As a result, maintenance and control of such systems are not easy, and costs are naturally increased. In the operation of such systems, special operations such as air extraction, may be required, and blocking by air is generally unavoidable. Accordingly, handling is difficult.

According to the invention, there is provided a filter system comprising a filter of porous, expanded polytetrafluoroethylene and means for flowing an impure liquid to be filtered through the filter, the filter system being entirely immersed in the impure liquid. The filter may be a hollow fiber of porous, expanded polytetrafluoroethylene, a tube of porous, expanded polytetrafluoroethylene or a supported film of porous, expanded polytetrafluoroethylene. Preferably the filter is a plurality of hollow fibers of porous, expanded polytetrafluoroethylene or a plurality of tubes of porous, expanded polytetrafluoroethylene.

The following is a more detailed description of some embodiments of the invention, by way of example, reference being made to the accompanying drawings, in which:-

Figure 1 is a side elevational view, partly in cross-section, of one embodiment of one filter for a filter system according to the present invention,

Figure 2 is an enlarged partial pictorial view of the read-out circle 12 of Figure 1 showing one embodiment of a supported filter membrane of the filter of Figure 1,

Figure 3 shows an embodiment of a filter system according to the invention,

Figure 5 is an enlarged partial pictorial view of another embodiment of a supported filter membrane for the filter system of Figure 3,

Figure 6 is a pictorial view of another embodiment of a filter for the filter system of Figure 3, and

Figure 7 is a cross-sectional view taken along the line 7-7 of Figure 6.

A filter system is provided having a filter of porous, expanded polytetrafluoroethylene, means for flowing an impure liquid to be filtered through the filter, the filter system being entirely immersed in the impure liquid to be filtered. The filter is preferably in the form of a plurality of hollow fibers, a plurality of tubes or a supported film.

The filter system includes (a) a filter which has an internal cavity and (b) one or more headers which connect the ends of the aforementioned filter, the filter system being characterized in that the aforementioned filter is designed so that it can be used entirely immersed in the liquid to be filtered, without having any external tube or case requiring sealing properties.

The filter is immersed in the liquid that is to be filtered, and filtration of the liquid is performed by causing the flow of the liquid through the filter by means of a pressure-feeding mechanism such as a pump.

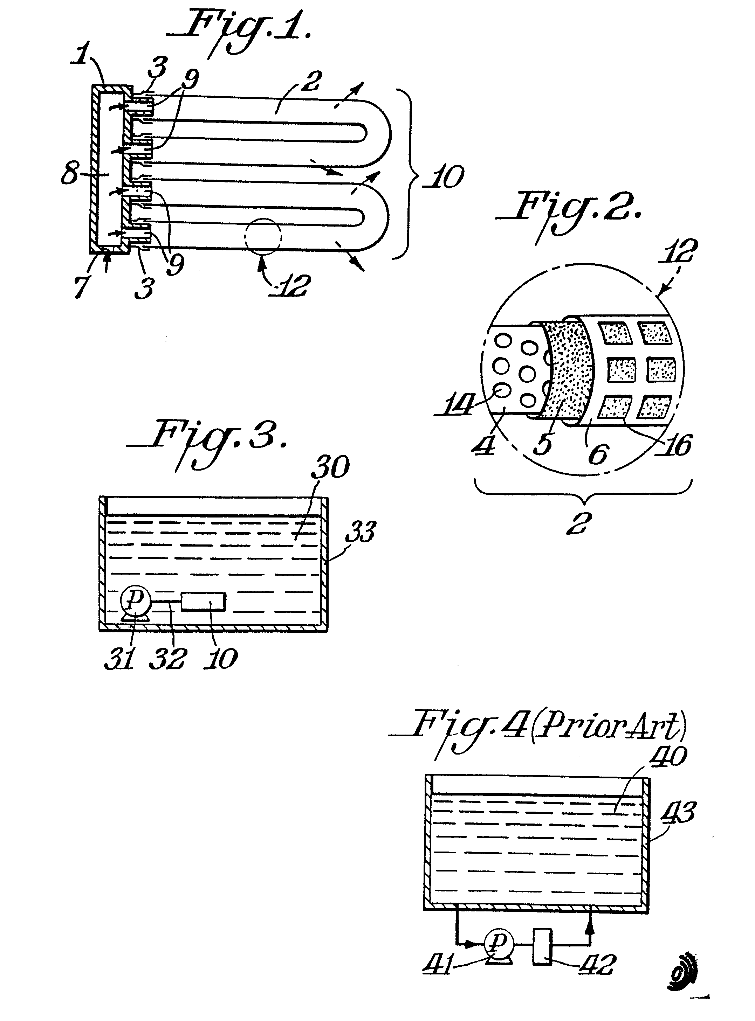

Referring now to Figure 1, a filter 10 is provided having a header 1 which has a flow path 8 formed in its interior, and which has an inlet port 7 installed in the flow path 8. Both ends of filter tubes 2 are coupled to coupling ports 9 which are installed in the aforementioned header 1. These coupling ports are sealed by means of heat-shrink sealing tubes 3. The flow path through the filter 10 is in the direction indicated by the arrows.

One example of the structure of the aforementioned filter tubes 2 is shown in Figure 2 in an enlarged partial pictorial view of the read-out circle 12 of Figure 1. Specifically, in these filter tubes 2, a porous filtering membrane 5 is mounted between a supporting inner tube 4 which has openings 14 formed in it, and a supporting outer tube 6 which similarly has openings 16 formed in it. Besides a hollow tube-form membrane, a hollow fiber-form membrane, film-form membrane or tape-form membrane may be used for the aforementioned filtering membrane 5, and depending on the dimensional conditions, one or both of the supporting inner tube 4 and supporting outer tube 6 may be omitted. Furthermore, even in cases where a supporting outer tube 6 is used, the tube used does not have pressure-resistant sealing properties (as in the case of the conventional mechanism shown in Figure 4); i.e. the tube need merely be sufficiently strong to maintain the shape of the filtering membrane 5. In cases where a tape-form filtering membrane 5 is used as mentioned above, the tape-form membrane may be wrapped in a spiral form with partial overlapping around the outside of the aforementioned supporting inner tube 4.

In the filter shown in Figure 1, both ends of the filter tubes 2 are coupled to coupling ports 9. In some cases, however, it would also be possible to couple only one end of each filter tube 2 to the aforementioned header 1, and to close off theouter end of each tube 2 by means of a restraint, or to couple the other end of each tube 2 to a separate header (not shown in the Figure) which has no inlet port and no outlet port.

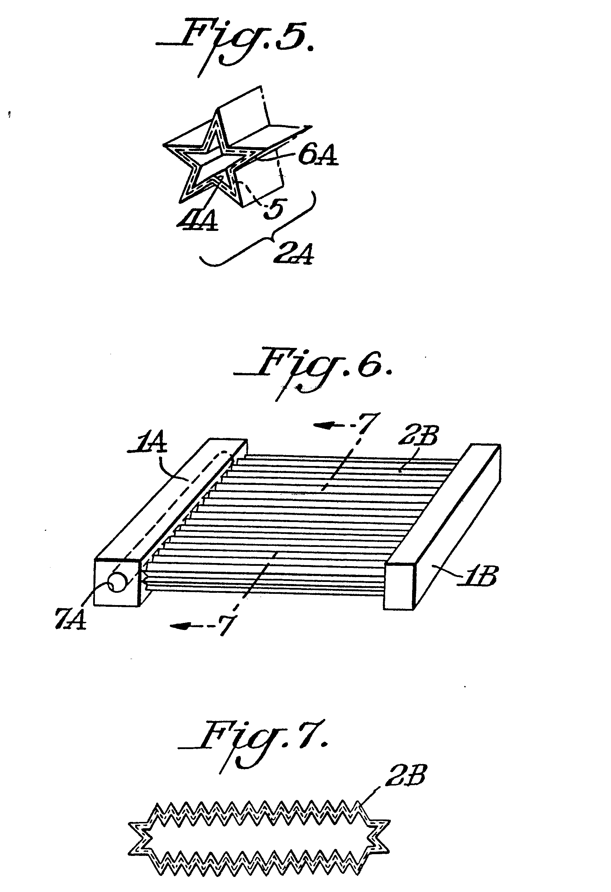

The conditions of utilization of the filter system constructed as described above, are illustrated in Figure 3. Using a pump 31 which can be used immersed in a liquid 30, the discharge port of the pump 31 and the aforementioned inlet port 7 are appropriately connected by means of a connecting pipe 32 inside a tank 33 which contains the liquid 30 that is to be filtered. The filter system (which comprises the aforementioned header 1 and filter tubes 2 as shown in Figure 1) is set in the bottom of the aforementioned tank 33, and the pump 31 is driven. As a result, an effective filtering purification action is performed inside the tank 33.

Dimensional conditions such as the material, thickness and pore size of the filtering membrane 5 can be selected as desired in accordance with the type of liquid that is to be treated and the purpose of filtration. However, porous materials made of fluororesins have wide applicability in terms of chemical resistance to the aforementioned strong acids and other compounds. For example, a membrane manufactured from a polytetrafluoroethylene resin made porous by rolling and stretching as disclosed in U.S. Patent 3,953,566, with a membrane thickness of approximately 40 to 70 microns and a pore size of approximately 0.1 to 1.0 microns, is desirable, and allows high-precision filtration to be achieved. In cases where such a filtering membrane 5 has insufficient strength, the aforementioned supporting inner tube 4 and supporting outer tube 6 can be appropriately employed.

Furthermore, in the case of a film-form membrane, a supporting body - filtering membrane - supporting body structure or a filtering membrane - supporting body structure can be used. Furthermore, in the case of such a film-form filtering membrane, the membrane can be pleated as shown pictorially and in cross-section in Figure 5, so that the filtration area is increased. Furthermore, in the case of a film-form membrane, the film may be clamped between supports 4A and 6A having openings, which supports may be nets or screens, on both sides, or may be laminated with a net which acts as a supporting body. In addition to oval or other cross-sectional tube forms, pleats may be formed so that the tubes have a star-shaped cross-section as shown in Figure 5 or other cross-section.

In cases where a header 1 such as that described above is used, multiple filter tubes 2 are generally used. A part which is used as a header facing the header 1 shown in Figure 1 need not have a flow path formed in its interior. Such a part need merely be able to maintain the filter tubes 2 in their prescribed positions. In cases where a sheet-form filtering membrane is used, the sheet-form membrane may be clamped between supporting parts 1A and 1B on both sides, folded into pleats and thermally fused into a conduit form as shown in Figure 6, thus producing a structure 2B with the cross-section shown in Figure 7. The ends of such a conduit are attached to headers as shown in Figure 6. In addition to heat-shrink tubes 3, this attachment may be effected by thermal fusion.

The filter system constructed as described above, may be used entirely immersed in a tank such as an etching tank or washing tank, as shown in Figure 3. There is no escape of the liquid (chemical solution or water) due to leaks. Furthermore, the generation of impurities from the piping can be minimized. Thus, the tightly sealed outer tubes, caps or cases, which are used in conventional filter systems (as illustrated in Figure 4), can be completely omitted. Accordingly, the filter system is simple and inexpensive.

By means of the construction described above, filtration can be performed simply and inexpensively. Because the filter is used under conditions in which it is surrounded by the pressure of the liquid being filtered, there is no danger of the escape of the liquid (chemical solution or water) to the environment due to breakage of the filter. Filtration can be performed under conditions in which maintenance and control are safe and easy. Safe operation can be performed in which there is neither need for air extraction nor will any blocking by air occur. Thus, there are numerous improved features and great industrial merit.

0045s

## CLAIMS

1. A filter system comprising a filter of porous, expanded polytetrafluoroethylene and means for flowing an impure liquid to be filtered through said filter, said filter system being entirely immersed in said impure liquid.

2. A filter system according to claim 1, wherein said filter is a hollow fiber of porous, expanded polytetrafluoroethylene.

3. A filter system according to claim 1, wherein said filter is a tube of porous, expanded polytetrafluoroethylene.

4. A filter system according to claim 1, wherein said filter is a supported film of porous, expanded polytetrafluoroethylene.

5. A filter system according to claim 2, wherein said filter is a plurality of hollow fibers of porous, expanded polytetrafluoroethylene.

6. A filter according to claim 3, wherein said filter is a plurality of tubes of porous, expanded polytetrafluoroethylene.

Neu eingereicht /
Nouvellemen **0246036**

Fig.1.

Fig.2.

Fig.3.

Fig.4 (Prior Art)

*Fig.5.*

*Fig.6.*

*Fig.7.*

**European Patent Office**

## EUROPEAN SEARCH REPORT

Application number

EP 87 30 4101

### DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | US-A-3 813 461 (NAOHIRO MURAYAMA et al.) * Abstract; column 1, lines 29-48 * | 1,3,4 | B 01 D 35/02 B 01 D 13/00 B 01 D 13/01 |
| | --- | | |
| Y | US-A-3 108 065 (J.D. McMICHAEL) * Column 1, lines 9-30; column 2, lines 6-28; figure 1 * | 1 | |
| | --- | | |
| Y | US-A-4 187 390 (R.W. GORE) * Abstract; column 5, lines 40-47; columns 12-13, example 7; claims 1,9,11-16 * | 3,4 | |
| | --- | | |
| A | CH-A- 375 995 (GEBRÜDER SULZER AG) * Page 1, lines 1-4; page 1, line 41 - page 2, line 51; figure * | 1 | |
| | ----- | | **TECHNICAL FIELDS SEARCHED (Int Cl 4)** B 01 D |

The present search report has been drawn up for all claims

| Place of search | Date of completion of the search | Examiner |
|---|---|---|
| THE HAGUE | 21-07-1987 | VAN IDDEKINGE R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82